(19) Europäisches Patentamt
European Patent Office
Office européen des brevets

(11) Veröffentlichungsnummer: **0 195 301**
**A2**

(12) # EUROPÄISCHE PATENTANMELDUNG

(21) Anmeldenummer: **86102772.0**

(22) Anmeldetag: **03.03.86**

(51) Int. Cl.⁴: **C 01 B 25/00**
C 08 K 3/02, C 08 K 9/02
C 08 K 9/08, C 08 L 77/00

(30) Priorität: **16.03.85 DE 3509568**

(43) Veröffentlichungstag der Anmeldung:
**24.09.86 Patentblatt 86/39**

(84) Benannte Vertragsstaaten:
**CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Nielinger, Werner, Dr.**
**Bärenstrasse 21**
**D-4150 Krefeld(DE)**

(72) Erfinder: **Michael, Dietrich, Dr.**
**Deswatinesstrasse 57**
**D-4150 Krefeld(DE)**

(72) Erfinder: **Fuellmann, Heinz-Josef, Dr.**
**Am Schneeberg**
**D-5653 Leichlingen 2(DE)**

(72) Erfinder: **Binsack, Rudolf, Dr.**
**Bethelstrasse 4a**
**D-4150 Krefeld(DE)**

(72) Erfinder: **Selbeck, Harald, Dr.**
**Erftweg 73**
**D-4150 Krefeld(DE)**

(54) **Stabilisierter, roter Phosphor und dessen Verwendung für flammfeste, thermoplastische Polyamid-Formmassen.**

(57) Pulverförmiger, roter Phosphor, der mit Zinkfluorid stabilisiert ist und dessen Verwendung als Flammschutzmittel für thermoplastische Formmassen.

EP 0 195 301 A2

Croydon Printing Company Ltd.

BAYER AKTIENGESELLSCHAFT 5090 Leverkusen, Bayerwerk
Konzernverwaltung RP
Patentabteilung Str/Abc

Stabilisierter, roter Phosphor und dessen Verwendung für flammfeste, thermoplastische Polyamid-Formmassen

Die vorliegende Erfindung betrifft flammfeste, thermoplastische Polyamidformmasen, die mit rotem Phosphor, der mit Zinkfluorid stabilisiert ist, brandwidrig ausgerüstet sind.

Die Verwendung von rotem Phosphor als Brandschutzmittel für thermoplastische Polyamide ist bekannt. Unter ungünstigen Bedingungen, wie z.B. bei erhöhten Temperaturen oder in Gegenwart von Feuchtigkeit, neigt der rote Phosphor zur Zersetzung in Phosphorwasserstoff und Säuren des 1- bis 5-wertigen Phosphors. Deshalb hat man bereits versucht, die Freisetzung des toxischen Phosphorwasserstoffs zu verhindern. Gemäß DOS 2 308 104 gelingt dies durch Zusatz von bestimmten Metallverbindungen oder gemäß DOS 2 703 052 durch Zugabe von Magnesium- oder Aluminiumsalzen einer chelatbildenden Aminoessigsäure. Außerdem kann der Phosphor zur Stabilisierung mit Bindemitteln, wie Wachsen oder Metallsei

fen (DOS 2 408 488), oder Polymeren, wie Phenol-Formaldehyd-Harzen (DAS 2 625 673, DOS 2 734 103) oder Polyestern (DOS 2 754 515) umhüllt werden. Nach der Lehre der DAS 2 745 076 hat sich insbesondere Cadmiumoxid als Zusatz zu umhülltem Phosphor bewährt. Nach einem weiteren Vorschlag (DOS 2 827 760) können auch Salze des Aluminiums, Zinks, Bleis, Magnesiums, Calciums, Zinns oder Antimons von Carboxylgruppen-haltigen Polymeren zur Stabilisierung verwendet werden. Die Herstellung dieser Produkte ist jedoch aufwendig und schwierig und die stabilisierende Wirkung dieser Systeme nicht immer befriedigend; außerdem ist die Verwendung insbesondere einiger Schwermetallverbindungen toxikologisch nicht unbedenklich.

Es wurde nun gefunden, daß man roten Phosphor mit Zinkfluorid ausgezeichnet stabilisieren kann, so daß die genannten Nachteile nicht auftreten. So entsteht praktisch kein Phosphorwasserstoff während der Herstellung und der Verarbeitung der stabilisierten Polyamide. Darüber hinaus bilden sich nur so geringe Mengen von Säuren des Phosphors, daß die elektrischen Eigenschaften des Polyamids, wie Kriechstromfestigkeit und Lichtbogendurchschlagsfestigkeit, nicht beeinträchtigt werden. Dies ist um so überraschender, da das Zinkchorid wegen seiner Hygroskopisität und Wasserlöslichkeit somit zur Stabilisierung über längere Zeiträume weniger gut geeignet ist. Zinkchlorid führt zusammen mit Wasser auch leicht zu Spannungsrißbildung. Die erfindungsgemäße Stabilisierung des Phosphor gegen die Phosphorwasserstoffbildung ist ebenso überraschend, da andere Fluoride die Bildung von Phosphorwasserstoff begünstigen.

Ein Gegenstand der Erfindung ist daher pulverförmiger, roter Phosphor, der mit Zinkfluorid gegen thermooxidative Zersetzung und Disproportionierung in Phosphorwasserstoff und Säuren des 1 - 5-wertigen Phosphors stabilisiert ist. Ein weiterer Gegenstand der Erfindung sind thermoplastische Polyamide, die den erfindungsgemäß stabilisierten roten Phosphor als Flammschutzmittel enthalten.

Eine ausreichende Stabilisierung des roten Phosphors wird mit 1 - 30 Gew.-%, vorzugsweise 3 - 15 Gew.-%, bezogen auf roten Phosphor, an Zinkfluorid erzielt.

Das Zinkfluorid kann sowohl mit dem feinteiligen roten Phosphor mechanisch abgemischt werden als auch bei seiner Herstellung in Gegenwart einer Phosphoraufschlämmung auf die Phosphorteilchen ausgefällt werden. Es ist auch möglich, den Stabilisator während der Einarbeitung des Phosphors in den Kunststoff direkt in die Polymerschmelze zuzugeben.

Der als Brandschutzmittel verwendete rote Phosphor sollte eine mittlere Teilchengröße $< 200$ µm, vorzugsweise $< 100$ µm aufweisen.

Ein weiterer Gegenstand der Erfindung sind auch thermoplastische Polyamidformmassen, die 0,5 - 15, vorzugsweise 1 - 8 Gew.-% roten Phosphor und Zinkfluorid in den oben angegebenen Mengen enthalten.

Das Zinkfluorid kann beispielsweise durch Fällung eines Zinksalzes mit Fluorwasserstoff oder einem Fluorid hergestellt werden. Die Fällung kann auch in Gegenwart von suspendiertem roten Phosphor erfolgen, so daß der Phosphor mit dem Zinkfluorid umhüllt ist. Der stabilisierte Phosphor kann zusätzlich mit einer Hülle, beispielsweise aus Phenol-Formaldehyd-Harzen oder Epoxidharzen, umgeben sein.

Als Polyamide kommen insbesondere aliphatische Polyamide wie Polycaprolactam, Poly(hexamethylenadipinsäureamid), Poly(aminoundecanamid) und Polylaurinlactam in Betracht, ferner Homo- und Copolyamide aus Dicarbonsäuren wie Adipinsäure, Azelainsäure, Sebazinsäure, Decandicarbonsäure, Terephthalsäure, Isophthalsäure und Diaminen wie Hexamethylendiamin, Trimethylhexamethylendiamin, Bis-(4-aminocyclohexyl)-methan, Bis-(4-aminocyclohexyl)-propan-2,2 sowie Copolymerisate dieser Monomeren mit Lactamen. Polyamid-6 und/oder Polyamid-6,6 kann bevorzugt erfindungsgemäß flammfest ausgerüstet werden.

Die Herstellung der erfindungsgemäßen thermoplastischen Polyamid-Formmassen erfolgt durch Mischen der Komponenten in handelsüblichen Extrudern oder Knetern. Dabei kann das wie oben beschriebene stabilisierte Flammschutzmittel direkt in den Thermoplasten oder in Form eines Konzentrates im Thermoplasten in diesen eingearbeitet werden. Es ist auch möglich, den roten Phosphor und den Stabilisator jeweils separat zu einem Thermoplastenkonzentrat zu verarbeiten oder die beiden Komponenten separat direkt in den Thermoplasten einzugeben.

Der Phosphor kann außerdem mit anderen Metallverbindungenvorstabilisiert sein, wie z.B. mit 0,3-3 Gew.-% Magnesiumoxid, Aluminiumoxid, Bleioxid, Zinkoxid, oder Phlegmatisierungsmittel enthalten wie z.B. 0,05 - 1 Gew.-% Paraffinöl oder hochsiedende Ester.

Die stabilisierten, brandwidrig ausgerüsteten Polyamide können die üblichen Zusätze und Hilfsmittel enthalten, beispielsweise einen oder mehrere Füllstoffe, insbesondere Glasfasern in Mengen von 10 - 60 Gew.-%, bezogen auf die gesamte Mischung. Als weitere Füll- und Verstärkungsstoffe kommen Mikroglaskugeln, Kreide, Quarze wie beispielsweise Novaculit und Silikate wie Asbest, Feldspat, Glimmer, Talkum, Wollastonit sowie Kaolin in kalzinierter und nicht kalzinierter Form in Betracht. Außerdem sind Farbstoffe und Pigmente, insbesondere Farbruße und/oder Nigrosinbasen, Stabilisatoren, Verarbeitungshilfsmittel und staubbindende Mittel zu nennen, ferner Schlagzähmodifikatoren beispielsweise auf der Basis von Copolymerisaten des Ethylens, Poly(meth)-acrylaten und gepfropften Polybutadienen.

Die thermoplastischen Formmassen werden nach den bekannten Methoden durch Spritzguß oder Extrusion verarbeitet. Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte, z.B. Elektrohaushaltsgeräte und für Automobilteile Verwendung.

Beispiel 1

Man erhitzt eine Mischung aus Polyamid-66 mit einer relativen Viskosität von 2,9, gemessen an einer 1 gew.-%igen Lösung in m-Kresol bei 25° C, 10 Gew.-% rotem Phosphor (als 20 gew.-%iges Konzentrat in Polyamid-66) und dem Stabilisator unter Rühren in einer Stickstoffatmosphäre 30 min auf 280° C (Badtemperatur). Das Ausgangsgemisch hat bei allen Versuchen einen Feuchtigkeitsgehalt von 0,2 Gew.-%.

Der während der Reaktion entstehende Phosphorwasserstoff wird mit einem Stickstoffstrom in eine 2 gew.-%ige wäßrige Quecksilber-2-chlorid-Lösung geleitet und über den gemäß Gleichung

$$PH_3 + 3\ HgCl_2 = P\ (HgCl)_3 + 3\ HCl$$

gebildeten Chlorwasserstoff acidimetrisch bestimmt.

Um die in Wasser löslichen Säuren zu ermitteln, extrahiert man 35 g des auf 280° C erhitzten Polyamids 16 Std. mit Wasser von 95° C. Der gesamte Extrakt wird auf 200 ml aufgefüllt. An dieser Lösung werden pH-Wert und Phosphorgehalt gemessen.

In Tabelle 1 sind in Abhängigkeit vom Stabilisatorgehalt der entstandene Phosphorwasserstoff sowie pH-Wert und Gehalt an Phosphor des Extraktes angegeben.

Die Menge des Phosphorwasserstoffs bezieht sich auf 50 g Phosphor-haltiges Polyamid, die Menge des Phosphors im Extrakt auf 35 g Polyamid.

Tabelle 1

| Beispiel | Stabilisator | Menge (Gew.-%) | $PH_3$ (mg) | Extrakt pH-Wert | Extrakt Phosphor (mg) |
|---|---|---|---|---|---|
| 1 | Zinkfluorid | 0,32 | 1,9 | 3,45 | 3,4 |
| 2 | " | 0,62 | 1,6 | 4,15 | 1,2 |
| 3 | " | 0,95 | 1,6 | 3,75 | 1,6 |
| 4 | " | 1,3 | 1,1 | 4,0 | 1,1 |

Beispiel 2

Auf einem Doppelwellenextruder vom Typ ZSK 83 der Firma Werner & Pfleiderer werden bei einer Massetemperatur von 280°C und einem Durchsatz von 50 kg/h aus einer Mischung von 50 Gew.-Teilen Polyamid 66 mit einer relativen Viskosität von 2,9, 25 Gew.-Teilen 20 %iges Phosphorkonzentrat in Polyamid 66 und 25 Gew.-Teilen Glasfasern unter Zusatz verschiedener Mengen Stabilisator Polyamidformmassen hergestellt. Zur Prüfung der Stabilität des Phosphors in der Polyamidschmelze wurden die durch Extraktion von löslichen Phosphorverbindungen befreiten Polyamide getrocknet und 30 min auf 280°C erhitzt. Der dabei gebildete Phosphorwasserstoff, pH-Werte und Phosphorgehalte der Extrakte sind in der folgenden Tabelle angegeben.

| Stabilisator | Menge (Gew.-%) | $PH_3$ (mg) | Extrakte pH-Wert | Extrakte Phosphor (mg) |
|---|---|---|---|---|
| ohne | | 0,6 | 3,2 | 11,0 |
| Zinkfluorid | 0,25 | 0,1 | 4,3 | 3,2 |
| " | 0,5 | nicht nachweisb. | 4,7 | 2,8 |

## Patentansprüche

1. Pulverförmiger, roter Phosphor, der mit Zinkfluorid stabilisiert ist.

2. Roter Phosphor nach Anspruch 1, dadurch gekennzeichnet, daß er mit 1-30 Gew.-% Zinkfluorid, bezogen auf roten Phosphor, stabilisiert ist.

3. Roter Phosphor nach Anspruch 2, dadurch gekennzeichnet, daß er mit 3 - 15 Gew.-% Zinkfluoid, bezogen auf roten Phosphor, stabilisiert ist.

4. Roter Phosphor nach Ansprüchen 1-3, dadurch gekennzeichnet, daß er zusätzlich mit einer Hülle aus Phenol-Formaldehyd- oder Epoxidharzen umgeben ist.

5. Verwendung von stabilisiertem roten Phosphor nach Ansprüchen 1-4 zum Flammfestausrüsten von Polyamiden.

6. Gegebenenfalls verstärkte, thermoplastische Polyamidformmassen, die als Flammschutzmittel stabilisierten roten Phosphor nach Ansprüchen 1-4 enthalten.

7. Polyamidformmassen nach Anspruch 6, dadurch gekennzeichnet, daß sie 0,5 - 15, vorzugsweise 1 - 8

Gew.-% roten Phosphor und und zur Stabilisierung des Phosphors Zinkfluoid in den in Anspruch 2 oder 3 angegebenen Mengen enthalten.

8. Polyamidformmassen nach Ansprüchen 6 oder 7, dadurch gekennzeichnet, daß sie 10 - 60 Gew.-% Füllstoffe enthalten.